# EUROPÄISCHE PATENTSCHRIFT

(11) **EP 0 617 663 B1**
(45) Veröffentlichungstag und Bekanntmachung des Hinweises auf die Patenterteilung: **15.11.1995**
(21) Anmeldenummer: 93900100.4
(22) Anmeldetag: 16.12.1992
(51) Int. Cl.: B32B 15/01, F01N 7/16

(54) **PLATTIERTES STAHLBLECH**
PLATED STEEL SHEET
TOLE D'ACIER PLAQUEE

(30) Priorität: 19.12.1991 DE 4141938
(43) Veröffentlichungstag der Anmeldung: 05.10.1994
(73) Patentinhaber: Emitec Gesellschaft für Emissionstechnologie mbH, 53797 Lohmar (DE)
(72) Erfinder: BAYER, Jürgen, D-7300 Esslingen 1 (DE); HALLER, Klaus, D-7000 Stuttgart 40 (DE)
(74) Vertreter: Kahlhöfer, Hermann, Dipl.-Phys.
(86) Internationale Anmeldenummer: EP9202925
(87) Internationale Veröffentlichungsnummer: WO9311934

(56) Entgegenhaltungen:
- DE-A- 1 951 141
- DE-A- 1 966 816
- DE-A- 2 036 682
- DE-A- 2 126 546
- FR-A- 2 594 732
- GB-A- 728 338
- GB-A- 1 190 638
- GB-A- 1 443 172
- US-A- 2 312 582
- US-A- 2 764 805
- US-A- 3 640 755
- US-A- 3 762 884

## Beschreibung

Die Erfindung betrifft plattiertes Stahlblech zum Herstellen Von Gehäusen oder Rohren oder dergleichen mit einem eine mittlere Schicht bildenden Grundwerkstoff und beidseitigen Auflagen aus Edelstahl und ein Gehäuse für einen Katalysator.

Plattierte Stahlbleche werden eingesetzt, um einerseits eine hohe Korrosionsbeständigkeit entsprechend dem verwendeten Edelstahl zu erhalten, andererseits jedoch die Werkstoffkosten zu verringern. Darüber hinaus besitzt plattiertes Stahlblech gegenüber Edelstahlblechen häufig den Vorteil, daß eine bessere Verformbarkeit erhalten wird. Die Schichtdicke der Auflagen beträgt in der Regel etwa 10 % der Gesamtblechdicke.

Aus der GB-A-1443172 ist bereits ein plattiertes Stahlblech für Auspuffrohre bekannt, welches eine Innenbeschichtung aus Edelstahl und eine korrosionsfeste Außenbeschichtung aufweist. Die Verwendung besonderer Kombinationen von Stählen für diese Beschichtungen wird nicht in Betracht gezogen.

Der Erfindung liegt die Aufgabe zugrunde, ein plattiertes Stahlblech zu schaffen, das sich insbesondere zum Führen oder Aufnehmen von heißen Abgasen von Kraftfahrzeugen eignet, beispielsweise von Katalysatorgehäusen oder Schalldämpfergehäusen in Auspuffanlagen.

Diese Aufgabe wird dadurch gelöst, daß eine erste Seite des Stahlblechs mit einer Auflage aus einem austenitischen Edelstahl und eine zweite Seite mit einer Auflage aus einem ferritischen Edelstahl versehen ist.

Durch diese Ausbildung ist es möglich, das plattierte Stahlblech an die besonderen Einsatzbedingungen anzupassen, wobei die später innenliegende Schicht aus einem heißgaskorrosionsstabilen Edelstahl besteht und die Außenschicht aus einem naßkorrosionsstabilen Edelstahl. Bei den bekannten plattierten Stahlblechen bestehen die Auflagen jeweils aus dem gleichen Edelstahl, so daß ein Kompromiß zwischen Heißgaskorrosionsstabilität und Naßkorrosionsstabilität gefunden werden mußte. Das erfindungsgemäße Material ist kostengünstiger als ein Edelstahlvollmaterial und darüber hinaus auch noch besser an den jeweiligen Anwendungsfall auslegbar.

In weiterer Ausgestaltung der Erfindung wird vorgesehen, daß die Stärke der Auflage der einen Seite von der Stärke der Auflage der anderen Seite verschieden ist. Auch damit läßt sich eine weitere verbesserte Anpassung an den jeweiligen Anwendungsfall erzielen. Beispielsweise ist es möglich bei Katalysatorgehäusen oder Schalldämpfergehäusen oder dergleichen die später außerliegende Auflage aus einem stärkeren Material herzustellen als die innere Auflage. Damit kann für beide Auflagen etwa die gleiche Lebensdauer gewährleistet werden, da dann berücksichtigt werden kann, daß die außenliegende Auflage nicht nur Naßkorrosion ausgesetzt ist, sondern auch mechanischen Beanspruchungen durch Beaufschlagen mit Steinen oder Sand oder dergleichen.

Weitere Merkmale und Vorteile der Erfindung ergeben sich aus der nachfolgenden Beschreibung eines in der Zeichnung dargestellten Ausführungsbeispieles.
- Fig. 1: zeigt einen Längsschnitt durch ein Katalysatorgehäuse aus dem erfindungsgemäßen Stahlblech und
- Fig. 2: zeigt einen Ausschnitt II einer Wandung des Katalysatorgehäuses.

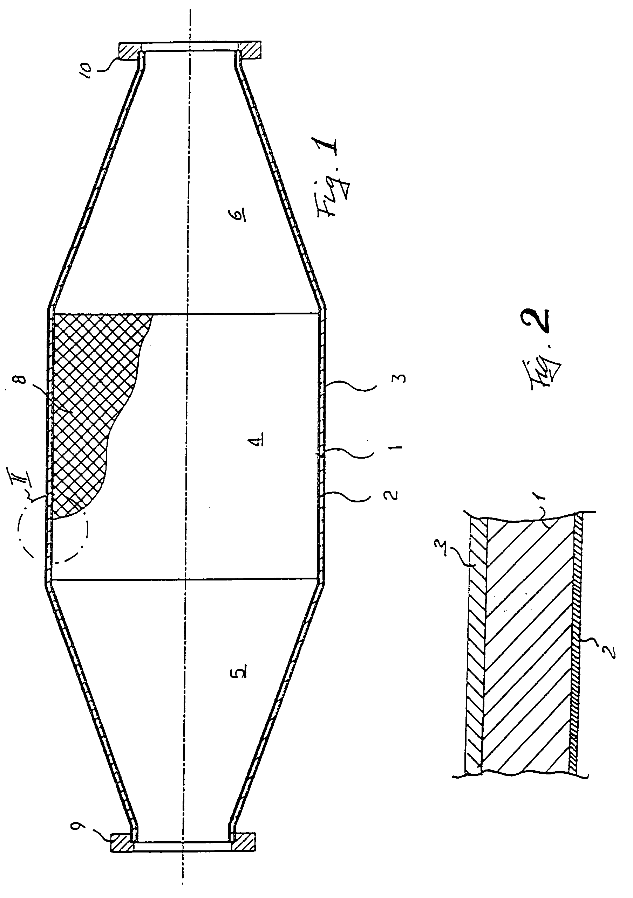

Das in Fig. 1 dargestellte, aus zwei mittels einer Flanschverbindung verbundenen Schalen gebildete Katalysatorgehäuse besitzt einen mittleren zylindrischen oder ovalen Abschnitt 4, in welchem eine Trägermatrix 8 für ein katalytisches Material angeordnet ist. Vor und nach dem mittleren Abschnitt 4 sind jeweils kegelstumpfförmig ausgebildete Abschnitte 5, 6 angeordnet, die in Ringflanschen 9, 10 enden. Mittels dieser Rangflansche 9, 10 ist das Katalysatorgehäuse zwischen Rohrabschnitten einer Auspuffanlage einfügbar.

Die Schalen des Gehäuses sind aus plattiertem Stahlblech geformt, das einen Grundwerkstoff 1 aufweist, der beidseits mit Auflagen 2, 3 versehen ist, die aus unterschiedlichen Edelstahlen bestehen. Dabei wird insbesondere vorgesehen, daß die die Innenwandung bildende Auflage 2 aus einem ferritischen Edelstahl besteht. Die Trägermatrix 8 ist ebenfalls aus einem ferritischen Edelstahl hergestellt, so daß eine gute Verbindung zwischen der Trägermatrix 8 und der Auflage 2, insbesondere durch Löten herstellbar ist.

Das Stahlblech besitzt einen Grundwerkstoff 1 aus einem Sondertiefziehstahl, beispielsweise einem Stahl mit der Werkstoffnummer 1.0338, der mit Titan legiert ist. Dieser Grundwerkstoff ist beidseits mit Auflagen 2, 3 versehen, die aufplattiert sind. Dabei können alle üblichen Plattierungsverfahren angewandt werden, wie Gießplattieren und insbesondere Walzplattieren. Um das plattierte Stahlblech an die besonderen Einsatzbedingungen anzupassen, insbesondere für eine Verwendung von Katalysatorgehäusen oder Schalldämpfergehäusen oder dergleichen von Auspuffanlagen von Kraftfahrzeugen, bestehen die beiden Auflagen aus unterschiedlichen Edelstählen. Hierbei kommen insbesondere Auflagewerkstoffe mit der Werkstoffnummer 1.4016, 1.4113, 1.4510, 1.4742, 1.4767, d. h. ferritische Edelstähle sowie mit den Werkstoffnummern 1.4301, 1.4401, 1.4541, 1.4571, 1.4828, 1.4841, 1.4878, d. h. austenitische Edelstähle, zum Einsatz. Diese Edelstähle haben unterschiedliche Eigenschaften bezüglich einer Heißgaskorrosionsstabilität und einer Naßkorrosionsstabilität. Dies wird in dem vorliegenden Fall dazu ausgenutzt, daß die später außenliegende, einer Naßkorrosion ausgesetzte Auflage aus einem entsprechend naßkorrosionsstabilen Edelstahl z. B. 1.4301 oder 1.4541, besteht, während die innenliegende Auflage aus einem entsprechend heißgaskorrosionsstabilen Edelstahl besteht, z. B. 1.4742 oder 1.4767.

Wie aus der Zeichnung zu ersehen ist, besitzt die Auflage 3 eine deutlich größere Dicke als die Auflage 2. Bei einem Katalysatorgehäuse oder Schalldämpfergehäuse einer Auspuffanlage wird vorgesehen, daß diese Auflage 3 außen liegt, da sie zusätzlich zu der Korrosionsbeanspruchung auch noch mechanischen Beanspruchungen durch aufprallenden Sand, Steine oder dergleichen ausgesetzt ist. Aufgrund der unterschiedlichen Schichtdicke ist es möglich, trotz dieser unterschiedlichen Beanspruchung zu erreichen, daß die Lebensdauer beider Auflagen 2, 3 wenigstens annähernd gleich ist.

## Patentansprüche

1. Plattiertes Stahlblech zum Herstellen von Gehäusen oder Rohren oder dergleichen mit einem eine mittlere Schicht bildenden Grundwerkstoff (1) und beidseitigen Auflagen aus Edelstahl, dadurch gekennzeichnet, daß eine erste Seite mit einer Auflage (3) aus einem austenitischen Edelstahl und eine zweite Seite mit einer Auflage (2) aus einem ferritischen Edelstahl versehen sind.

2. Stahlblech nach Anspruch 1, dadurch gekennzeichnet, daß die Stärke der Auflage (3) der ersten Seite von der Stärke der Auflage (2) der zweiten Seite verschieden ist.

3. Gehäuse für einen Katalysator aus einem plattierten Stahlblech nach einem der Ansprüche 1 oder 2, dadurch gekennzeichnet, daß die zweite Seite mit der Auflage (2) aus einem ferritischen Edelstahl die Innenseite des Gehäuses bildet.

4. Gehäuse nach Anspruch 3, dadurch gekennzeichnet, daß an die zweite Seite mit der Auflage (2) aus einem ferritischen Edelstahl eine Trägermatrix (8) aus ferritischem Edelstahl angelötet ist.

5. Gehäuse nach Anspruch 3 oder 4, dadurch gekennzeichnet, daß die Stärke der die Außenseite bildenden Auflage (3) größer als die Stärke der die Innenseite bildenden Auflage (2) ist.

## Claims

1. Plated steel sheet for producing housings or tubes or the like comprising a base material (1) forming a central layer and claddings on both sides of high-quality steel characterised in that a first side is provided with a cladding (3) of an austenitic high-quality steel and a second side is provided with a cladding (2) of a ferritic high-quality steel.

2. A steel sheet according to claim 1 characterised in that the thickness of the cladding (3) on the first side is different from the thickness of the cladding (2) on the second side.

3. A housing for a catalyst comprising a plated steel sheet according to one of claims 1 and 2 characterised in that the second side with the cladding (2) of a ferritic high-quality steel forms the inside of the housing.

4. A housing according to claim 3 characterised in that a carrier matrix (8) of ferritic high-quality steel is soldered to the second side with the cladding (2) of a ferritic high-quality steel.

5. A housing according to claim 3 or claim 4 characterised in that the thickness of the cladding (3) forming the outside is greater than the thickness of the cladding (2) forming the inside.

## Revendications

1. Tôle d'acier plaquée servant à fabriquer des boîtiers ou des tubes ou analogues, comportant un matériau de base (1) formant une couche médiane, et des revêtements situés sur les deux faces et réalisés en acier spécial, caractérisée en ce qu'une première face est pourvue d'un revêtement (3) formé d'un acier spécial austénitique et qu'une seconde face est pourvue d'un revêtement (2) formé d'un acier spécial ferritique.

2. Tôle d'acier selon la revendication 1, caractérisée en ce que l'épaisseur du revêtement (3) situé sur la première face diffère de l'épaisseur de revêtement (2) situé sur la seconde face.

3. Boîtier pour un catalyseur formé d'une tôle d'acier plaquée selon l'une des revendications 1 ou 2, caractérisé en ce que la seconde face pourvue du revêtement (2) réalisé en acier spécial ferritique forme la face intérieure du boîtier.

4. Boîtier selon la revendication 3, caractérisé en ce que sur la seconde face comportant le revêtement (2) réalisé en acier spécial ferritique est fixée par brasage une matrice de support (8) réalisée en acier spécial ferritique.

5. Boîtier selon la revendication 3 ou 4, caractérisé en ce que l'épaisseur du revêtement (3) formant la face extérieure est supérieure à l'épaisseur du revêtement (2) formant la face intérieure.
